# FASCICULE DE BREVET EUROPEEN

(11) **EP 1 080 343 B1**
(45) Date de publication et mention de la délivrance du brevet: **03.04.2002**
(21) Numéro de dépôt: 99922169.0
(22) Date de dépôt: 29.04.1999
(51) Int. Cl.: G01F 3/22

(54) **PROCEDE DE FABRICATION D'UN COMPTEUR DE GAZ ET COMPTEUR DE GAZ FABRIQUE PAR UN TEL PROCEDE**
HESTELLUNGSVERFAHREN FÜR EINEN GASZÄHLER SOWIE NACH EINEM SOLCHEN VERFAHREN HERGESTELLTER GASZÄHLER
METHOD FOR MAKING A GAS METER AND GAS METER OBTAINED BY SAID METHOD

(30) Priorité: 20.05.1998 FR 9806509
(43) Date de publication de la demande: 07.03.2001
(73) Titulaire: SCHLUMBERGER INDUSTRIES, F-92542 Montrouge Cédex (FR)
(72) Inventeur: DUMAY, Michel, F-51140 Jonchery sur Vesle (FR)
(74) Mandataire: Feray, Valérie
(86) Numéro de dépôt international: EP9903036
(87) Numéro de publication internationale: WO9960346

(56) Documents cités:
- EP-A- 0 390 934
- DE-A- 1 473 043
- DE-A- 2 756 163
- US-A- 3 161 049
- US-A- 5 594 167

## Description

L'invention est relative à un procédé de fabrication d'un compteur de gaz du type comprenant plusieurs chambres de mesure à membranes déformables ainsi qu'un corps central définissant plusieurs canaux de communication assurant respectivement l'amenée du gaz depuis l'extérieur dudit corps central dans les chambres de mesure et son évacuation hors du corps central ledit procédé consistant à effectuer un moulage par injection dudit corps central puis à démouler celui-ci.
L'invention concerne également le compteur de gaz fabriqué par ce procédé.

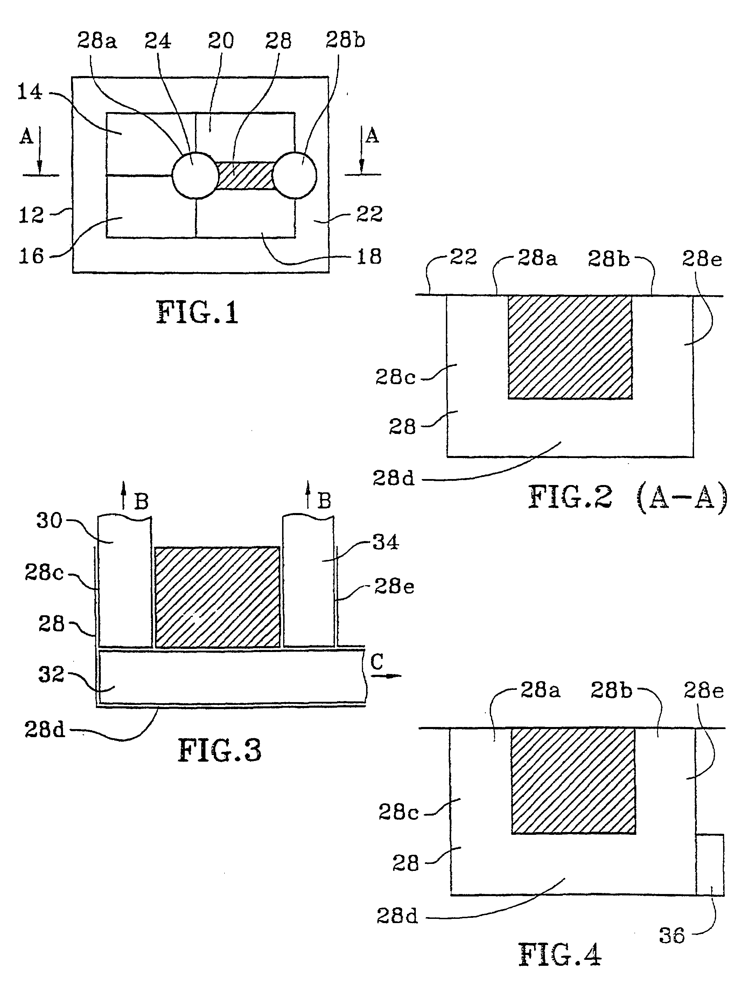

On connaît un compteur de gaz 10 dont une partie seulement est représentée sur les figures 1 à 4 et qui comprend quatre chambres de mesure (non représentées) séparées deux à deux par une membrane déformable ainsi qu'un corps central 12 définissant quatre canaux de communication 14,16,18,20 assurant respectivement l'amenée du gaz dans une chambre de mesure et son évacuation hors du corps central.
Les canaux de communication relient chacun par leurs deux extrémités opposées chaque chambre à une même face 22 dudit compteur qui est située dans la partie supérieure de celui-ci.
Selon la figure 1, qui est une vue dans un plan parallèle à la face supérieure du compteur, les quatre canaux visibles du dessus sont répartis autour d'une partie centrale 24.
Un cinquième canal 28 est aménagé entre deux canaux adjacents 18 et 20 et s'étend radialement, depuis une de ses extrémités 28a qui constitue la partie centrale, en direction de son extrémité opposée 28b située à la périphérie de la face supérieure 22.
Ce cinquième canal 28 assure l'évacuation du gaz hors du corps central du compteur.
D'après la figure 2 qui représente une vue en coupe dans un plan perpendiculaire à celui de la figure 1, le cinquième canal 28 possède une forme générale en U dont seules les deux extrémités opposées 28a, 28b débouchent dans la face supérieure 22 du compteur.
Ce canal 28 comprend trois portions constituant la forme en U : une première portion verticale 28c s'étendant depuis l'extrémité 28a confondue avec la partie centrale en direction de l'intérieur du corps central 12, une deuxième portion horizontale 28d qui s'étend vers la périphérie du corps central et une troisième portion verticale 28e qui relie la deuxième portion à l'extrémité opposée.
Le corps central 12 de ce type de compteurs est traditionnellement moulé par injection.
Lors du démoulage du corps central du compteur, les pièces 30, 32, 34 constitutives du moule et formant le cinquième canal de communication sont démoulées en deux étapes, dans une première direction représentée par les flèches notées B sur la figure 3, pour les première et troisième portions 28c et 28e du cinquième canal de communication 28 et, dans une seconde direction représentée par la flèche notée C pour la deuxième portion 28d de ce canal.
Lorsque le démoulage est terminé, il est prévu de fixer de manière définitive un bouchon de démoulage 36 (fig.4) à l'une des extrémités de la deuxième portion 28d du cinquième canal de communication qui est située à la périphérie du corps central, afin de garantir l'étanchéité au gaz lors du fonctionnement du compteur.
La présente invention vise à simplifier le procédé de fabrication de ce type de compteur de gaz.
La présente invention a ainsi pour objet un procédé de fabrication d'un compteur de gaz du type comprenant plusieurs chambres de mesure à membranes déformables ainsi qu'un corps central définissant plusieurs canaux de communication assurant respectivement l'amenée du gaz depuis l'extérieur dudit corps central dans les chambres de mesure et son évacuation hors du corps central, ledit procédé consistant à effectuer un moulage par injection dudit corps central puis à démouler celui-ci, caractérisé en ce que le procédé consiste à démouler tous les canaux de communication en une seule opération.
Ainsi, là où le procédé de l'art antérieur nécessitait deux opérations distinctes pour le démoulage, le procédé selon l'invention n'en prévoit qu'une.
En outre, étant donné que les compteurs de gaz sont des produits fabriqués en très grandes quantités, une simplification du procédé de fabrication se traduit par une réduction du coût de fabrication.
Plus précisément, le procédé selon l'invention prévoit de démouler tous les canaux de communication du compteur suivant une seule direction.
Selon un mode de réalisation de l'invention, tous les canaux de communication du compteur débouchent sur une même face du corps central et la direction de démoulage est perpendiculaire à ladite face du corps central.
De ce fait, il n'est plus nécessaire de prévoir, comme dans l'art antérieur, une opération supplémentaire pour fixer une pièce d'étanchéité additionnelle (bouchon) sur une portion de l'un des canaux de communication qui a été formée par démoulage dans une direction autre que celle dans laquelle ont été démoulés tous les autres canaux.
Le procédé de fabrication s'en trouve donc simplifié, son coût économique en est également réduit.
La présente invention a également pour objet un compteur de gaz obtenu par le procédé décrit précédemment, ledit compteur étant du type comprenant plusieurs chambres de mesure à membranes déformables ainsi qu'un corps central définissant plusieurs canaux de communication assurant respectivement l'amenée du gaz depuis l'extérieur dudit corps central dans les chambres de mesure et son évacuation hors du corps central, tous les canaux de communication débouchant sur une même face du corps central, caractérisé en ce que l'intégralité de chaque canal est visible depuis la face dudit. corps central.
Le compteur de gaz ainsi fabriqué est simplifié et plus fiable que celui de l'art antérieur puisque tout risque de fuite de gaz pouvant être causé par une opération imparfaite de fixation du bouchon d'étanchéité est évité.
Plus précisément, le couvercle de distribution comporte, d'une part, quatre lumières ayant chacune la forme d'un quart de secteur de cercle et qui sont séparées par des barrettes radiales d'étanchéité, chacune de ces lumières communiquant avec les extrémités débouchantes dégagées des quatre canaux de communication reliés aux chambres de mesure et, d'autre part, une couronne circulaire définissant avec les barrettes radiales quatre orifices communiquant avec l'extrémité débouchante dégagée d'un cinquième canal qui est destiné à l'évacuation du gaz.
En outre, le couvercle comporte une pièce qui s'étend de part et d'autre de l'une des barrettes radiales, dans la partie de celle-ci qui est située entre deux lumières, de manière à obturer une portion de l'extrémité débouchante dégagée d'un cinquième canal, afin d'assurer l'étanchéité entre les canaux de communication dont les extrémités débouchantes communiquent avec lesdites deux lumières.
Préférentiellement, le cinquième canal de communication est aménagé entre deux canaux de communication adjacents et une de ses extrémités est disposée dans une partie dite centrale autour de laquelle sont répartis les quatre autres canaux de communication.

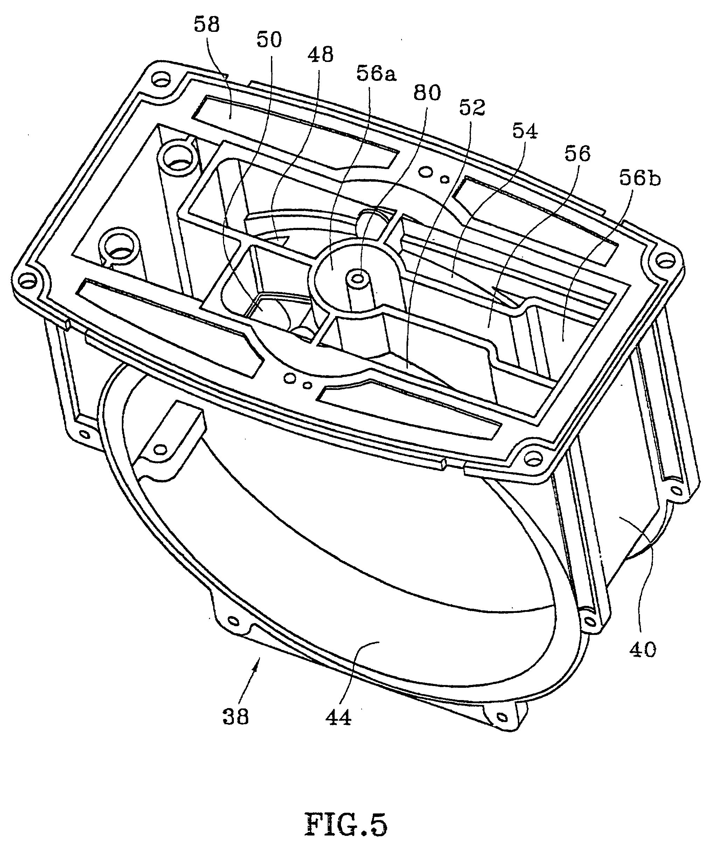

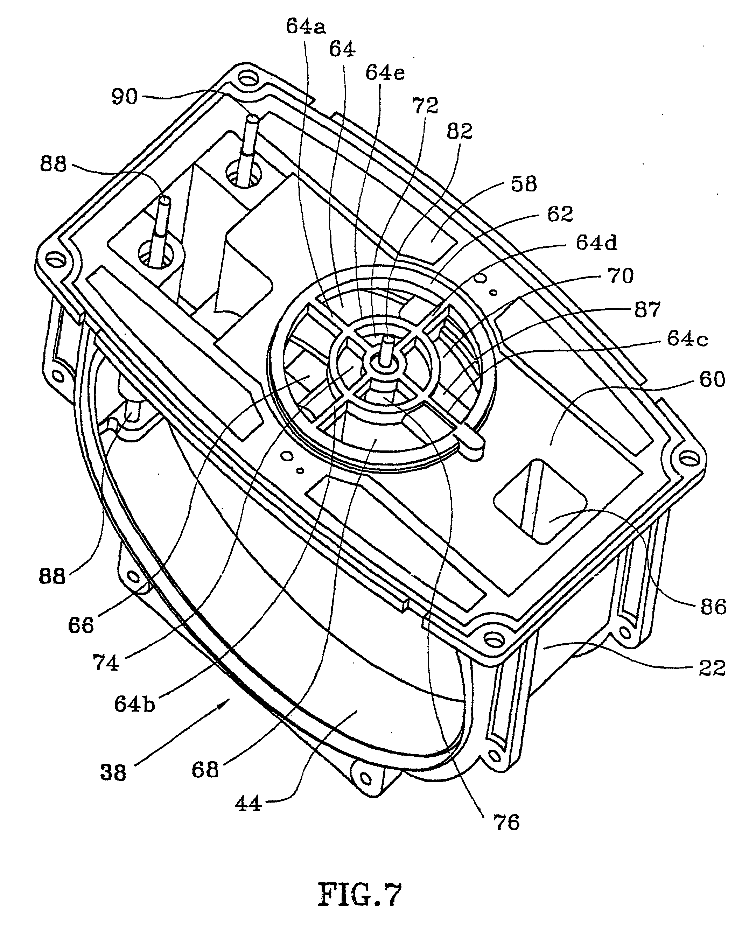

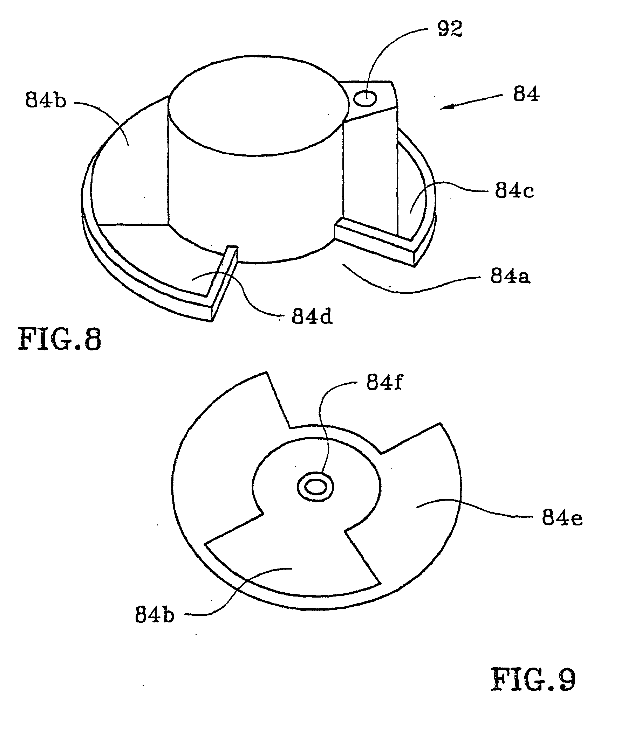

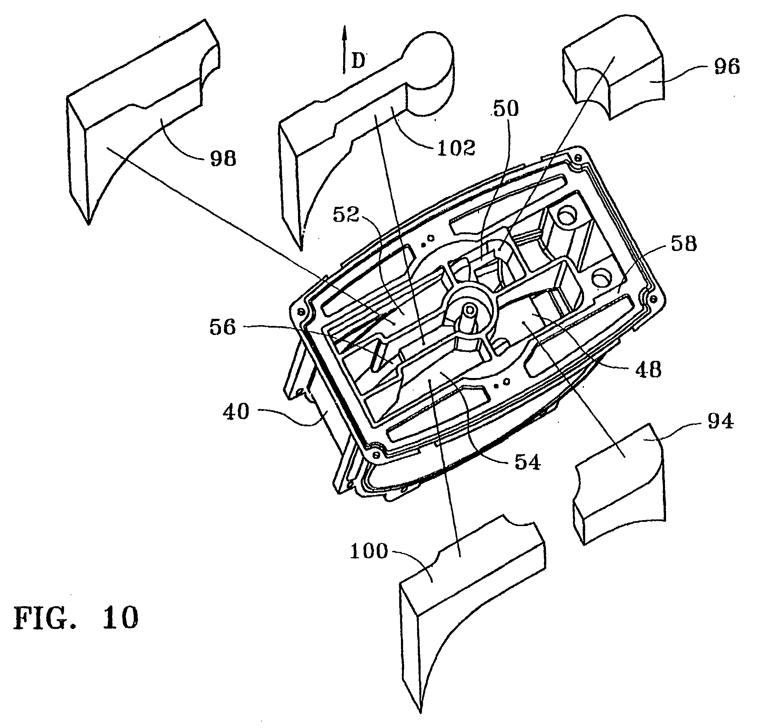

D'autres caractéristiques et avantages apparaîtront au cours de la description qui va suivre donnée à titre d'exemple non limitatif ,et faite en référence aux dessins annexés sur lesquels :
- la figure 1 est une vue schématique de dessus du corps central d'un compteur de gaz de l'art antérieur,
- la figure 2 est une coupe schématique partielle suivant AA de la partie supérieure du compteur de gaz représenté à la figure 1,
- la figure 3 est une coupe schématique partielle analogue à celle de la figure 2 et montrant les différentes parties du moule nécessaires à la fabrication du cinquième canal de communication,
- la figure 4 est une coupe schématique partielle analogue à celle de la figure 2 et montrant le cinquième canal de communication muni de son bouchon de démoulage après fabrication,
- la figure 5 est une vue en perspective du compteur de gaz selon l'invention montrant les canaux de communication pour l'amenée et l'évacuation du gaz,

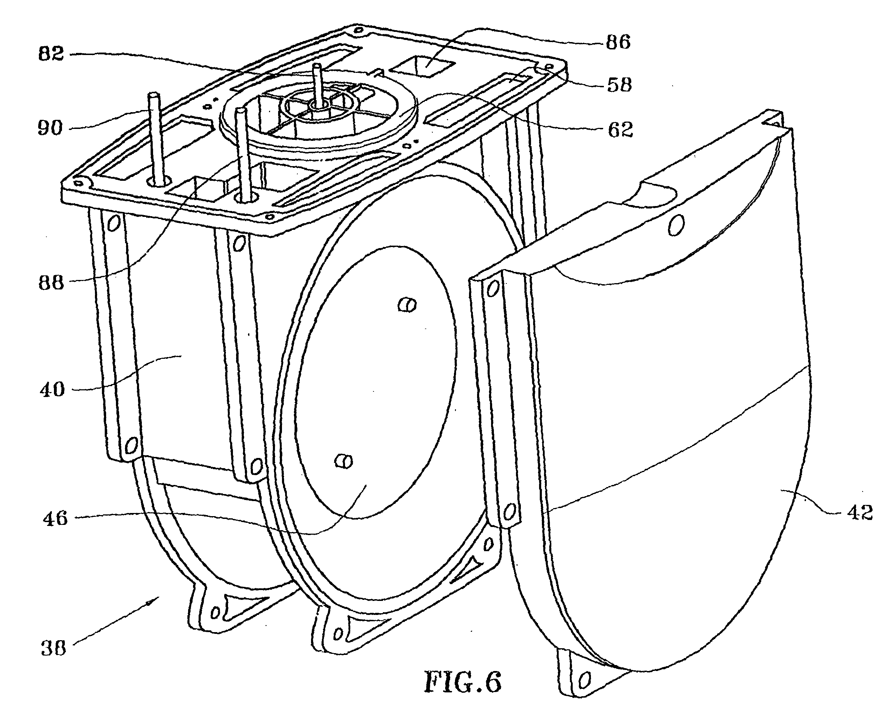

- la figure 6 est une vue en perspective du compteur de gaz selon l'invention montrant une membrane et un couvercle rapporté sur le corps central du compteur,
- la figure 7 est une vue en perspective du compteur de gaz dans la même position que celui de la figure 5 mais sur laquelle le couvercle de distribution, la plaque et les axes ont été ajoutés,
- les figures 8 et 9 sont respectivement des vues schématiques en perspective et de dessous du distributeur,
- la figure 10 est une vue de dessus en perspective montrant les différentes parties du moule ayant servi à la formation des canaux de communication,
- la figure 11 est une vue agrandie en coupe du cinquième canal de communication et de la partie du moule correspondante.
Comme représenté aux figures 5 et 6 et désigné par la référence générale notée 38, le compteur de gaz selon l'invention comprend tout d'abord un bloc central noté 40 et deux couvercles latéraux dont un seul 42 est représenté sur la figure 6.
Le bloc central 40 définit deux chambres dont une seule 44 est représentée sur la figure 5. Chaque chambre est délimitée d'une part par le bloc central 40 et d'autre part par une membrane déformable (membrane 46 sur la figure 3). Lorsque les couvercles sont rapportés sur le bloc central 40, ceux-ci définissent avec chaque membrane déformable une autre chambre de mesure. Ainsi, deux chambres de mesure sont situées de part et d'autre de chaque membrane déformable et le volume de ces chambres varie selon la position de la membrane.
Comme représenté sur la figure 5, le bloc central 40 définit dans sa structure interne quatre canaux 48, 50, 52, 54 qui communiquent chacun avec une chambre de mesure. Par exemple le canal 48 communique avec la chambre de mesure 44 et le canal 50 communique avec une chambre de mesure (non représentée sur la figure 5) qui est le symétrique de la chambre de mesure 44 par rapport au bloc central 40.
Les canaux 48-54 sont répartis autour d'une partie centrale.
Le bloc central 40 définit également un cinquième canal de communication référencé 56 qui permet l'évacuation du gaz hors dudit bloc central.
Le canal 56 est aménagé entre les deux canaux adjacents 52 et 54 et s'étend radialement, depuis une de ses extrémités 56a qui constitue la partie centrale, en direction de son extrémité opposée 56b qui est située à la périphérie du bloc central 40.
Les cinq canaux de communication débouchent par une de leurs extrémités sur une même face 58 du corps central.
Comme représenté sur la figure 5, chaque canal est libre de tout obstacle susceptible de masquer une partie dudit canal vis-à-vis de ladite face 58 et il est donc visible à partir de cette face.
Ainsi que représenté sur la figure 7, la face supérieure 58 du compteur reçoit une plaque métallique plane 60 qui est collée sur celle-ci pour des raisons d'étanchéité au gaz et qui obture les extrémités débouchantes des canaux de communication 48 à 56.
Une ouverture est pratiquée dans la plaque métallique et est centrée sur l'extrémité 56a du cinquième canal 56 confondue avec la partie centrale.
Le diamètre de l'ouverture est supérieur à celui de l'extrémité du cinquième canal afin de laisser dégagée une partie des extrémités débouchantes des quatre autres canaux de communication 48 à 54.
Une pièce 62 sensiblement circulaire, appelée couvercle de distribution, est montée sur la plaque métallique 60 au droit de l'ouverture.
Ce couvercle 62 comporte quatre lumières 64, 66, 68, 70 ayant chacune la forme d'un quart de secteur de cercle et qui sont séparées par des barrettes radiales d'étanchéité 64a-d.
Chacune de ces lumières communique avec les extrémités débouchantes dégagées des quatre canaux de communication 48 à 54.
Dans la partie centrale du couvercle de distribution 62, une couronne circulaire 64e définit avec les barrettes radiales 64a-d quatre orifices 72, 74, 76, 78 situés juste au droit de l'extrémité 56a du cinquième canal 56 confondue avec la partie centrale et communiquant chacun avec celle-ci.
Comme représenté sur la figure 5, un support cylindrique 80 d'axe perpendiculaire à la face supérieure 58 du compteur est solidaire du bloc central 40 et est disposé dans le cinquième canal de communication, à son extrémité 56a.
Au centre du couvercle 62 un pivot 82 est monté dans le support 80 suivant l'axe de celui-ci et est destiné à recevoir un élément de distribution du gaz 84 appelé distributeur, tel que représenté sur les figures 8 et 9.
Ce distributeur 84 est monté rotatif sur la surface du couvercle de distribution 62 et comporte quatre secteurs de cercles aménagés de manière à former un orifice 84a et une zone bombée 84b séparées par deux zones planes 84c, 84d, chaque zone couvrant une angle de 90°.
Le distributeur 84 comporte également une zone centrale évidée 84e qui communique avec la zone bombée creuse et qui comporte un palier 84f destiné à être emmanché sur le pivot 82.
L'orifice 84a défini par le distributeur a pour but de mettre successivement chaque lumière 64-70 et donc chacun des quatre canaux de communication 48-54 en communication avec l'extérieur du corps central 40 afin de faire pénétrer le gaz jusque dans la chambre de mesure correspondante.
La zone bombée 84b et la zone centrale 84e du distributeur ont pour but de mettre en communication l'un des quatre canaux 48-54 avec le cinquième canal 56 par l'intermédiaire de la lumière et de l'orifice correspondants du couvercle de distribution, tout en isolant l'ensemble vis-à-vis de l'extérieur du corps central et les deux zones planes 84c, 84d obturant les lumières restantes.
Ainsi, le gaz présent dans l'une des chambres de mesure sort de celle-ci, emprunte le canal de communication correspondant, franchit la lumière correspondante, passe dans la zone bombée 84b du distributeur puis dans sa zone centrale 84e, traverse les quatre orifices 72-78 du couvercle, s'écoule dans le cinquième canal de communication 56 et s'échappe de celui-ci par une ouverture 86 aménagée dans la plaque métallique 60 et confondue avec l'extrémité opposée 56b dudit canal.
Le couvercle 62 comporte également une pièce 87 qui s'étend de part et d'autre de la barrette radiale d'étanchéité 64c dans la partie de celle-ci qui est placée entre deux lumières 68, 70.
Ainsi, la pièce 87 obture une portion de l'extrémité débouchante afin d'assurer l'étanchéité entre le cinquième canal et les canaux de communications 52, 54 dont les extrémités débouchantes dans la face 58 communiquent avec les lumières 68, 70. Comme cela est bien connu la rotation du distributeur permet de commander l'admission et l'évacuation du gaz dans les différentes chambres de mesure. Les compteurs à quatre chambres et à distributeurs rotatifs sont bien connus en eux-mêmes, par exemple par le brevet américain n°3,161,049. Il est donc inutile décrire ici les détails de fonctionnement d'un tel compteur, c'est à dire les relations entre la position du distributeur rotatif 64 et la position des membranes dans les chambres de mesure. Il suffira de se reporter au document cité ci-dessus.
Il convient malgré tout de mentionner que le compteur de gaz comprend des moyens de transmission pour relier cinématiquement le distributeur aux membranes déformables.
Comme représenté sur les figures 5 et 7, les moyens de transmission comprennent deux axes 88, 90 qui traversent le bloc central 40 sur une partie de sa hauteur et qui communiquent avec les chambres du mesure du compteur. Sur la figure 7, une partie de l'axe 88 est visible dans la chambre 44. Chacun de ces axes est relié à une membrane déformable et sous l'effet du déplacement de ladite membrane effectue un mouvement de rotation correspondant.
Les moyens de transmission comprennent également, de manière non représentée sur les figures, deux ensembles de leviers qui relient chacun un axe 88, 90 à un autre axe qui est engagé dans une ouverture 92 pratiquée dans le distributeur 84. Ainsi, le mouvement des membranes déformables lors de l'admission et l'évacuation du gaz dans les chambres de mesure est communiqué par ces moyens de transmission au distributeur 84 qui effectue un mouvement de rotation correspondant.
La fabrication du corps central 40 du compteur de gaz est réalisée par des techniques connues d'injection, par exemple sous pression (ex :1000 bars), par l'intermédiaire d'un piston, d'aluminium liquide dans un moule métallique constitué de plusieurs parties.
Après une durée nécessaire à la solidification de l'aluminium les différentes parties du moule sont retirées (opération de démoulage) et notamment, ainsi que représenté sur la figure 10, les parties 94, 96, 98, 100 et 102 ayant servi à former les canaux de communication 48 à 56.
Les parties de moule 94-102 sont retirées en une seule opération, suivant la direction indiquée par la flèche repérée par la lettre D qui est perpendiculaire à la face 58 du corps central 40 (Fig.10).
Une telle opération de démoulage est particulièrement simple à réaliser.
Toutefois, il convient de noter que les pièces 94-102 pourraient également constituer une seule et même pièce.
Chacune des parties de moule 94-102 est artificiellement reliée au canal de communication correspondant 48-56 par un trait pour indiquer son emplacement dans le bloc central 40.

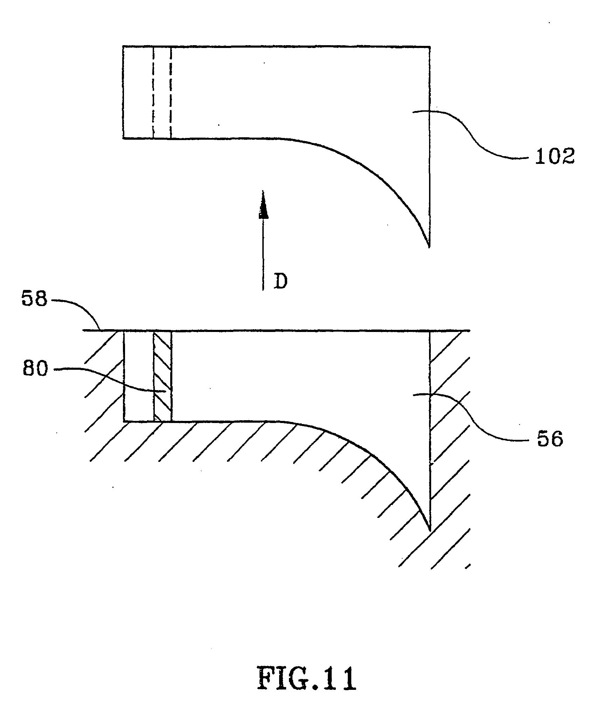

La figure 11 montre très schématiquement en coupe dans un plan perpendiculaire à la face 58 du bloc central 40 et passant par le support 80 la partie de moule 102 qui est retirée du cinquième canal de communication 56.
Cette représentation permet de souligner la simplification apportée par l'invention par comparaison avec l'art antérieur représenté aux figures 3 et 4 où deux directions de démoulage sont nécessaires ainsi que la pose ultérieure d'un bouchon d'étanchéité 36.

## Revendications

1. Procédé de fabrication d'un compteur de gaz (38) du type comprenant plusieurs chambres de mesure à membranes déformables ainsi qu'un corps central (40) définissant plusieurs canaux de communication (48-56) assurant respectivement l'amenée du gaz depuis l'extérieur dudit corps central dans les chambres de mesure et son évacuation hors du corps central, ledit procédé consistant à effectuer un moulage par injection dudit corps central puis à démouler celui-ci, **caractérisé en ce que** le procédé consiste à démouler tous les canaux de communication (48-56) en une seule opération.

2. Procédé selon la revendication 1, consistant à démouler tous les canaux de communication (48-56) suivant une seule direction.

3. Procédé selon la revendication 1 ou 2, selon lequel, tous les canaux de communication (48-56) du compteur débouchant sur une même face (58) du corps central, la direction de démoulage (D) est perpendiculaire à ladite face du corps central.

4. Compteur de gaz (38) fabriqué par le procédé selon l'une des revendications 1 à 3, du type comprenant plusieurs chambres de mesure à membranes déformables ainsi qu'un corps central (40) définissant plusieurs canaux de communication (48-56) assurant respectivement l'amenée du gaz depuis l'extérieur dudit corps central dans les chambres de mesure et son évacuation hors du corps central, tous les canaux de communication débouchant sur une même face (58) du corps central, **caractérisé en ce que** l'intégralité de chaque canal est visible depuis la face dudit corps central.

5. Compteur de gaz selon la revendication 4, dans lequel une plaque d'étanchéité (60) est disposée sur la face (58) du corps central de manière à obturer partiellement les extrémités débouchantes des canaux de communication (48-56) et une pièce (62) appelée couvercle de distribution est disposée au droit des parties desdites extrémités débouchantes qui sont dégagées.

6. Compteur de gaz selon la revendication 5, dans lequel le couvercle de distribution (62) comporte, d'une part, quatre lumières (64-70) ayant chacune la forme d'un quart de secteur de cercle et qui sont séparées par des barrettes radiales d'étanchéité (64a-d), chacune de ces lumières communiquant avec les extrémités débouchantes dégagées des quatre canaux de communication (48-54) reliés aux chambres de mesure et, d'autre part, une couronne circulaire (64e) définissant avec les barrettes radiales quatre orifices (72-78) communiquant avec l'extrémité débouchante dégagée d'un cinquième canal (56) qui est destiné à l'évacuation du gaz.

7. Compteur de gaz selon la revendication 6, dans lequel le couvercle comporte en outre une pièce (87) qui s'étend de part et d'autre de l'une (64c) des barrettes radiales, dans la partie de celle-ci qui est située entre deux lumières (68, 70), de manière à obturer une portion de l'extrémité débouchante dégagée du cinquième canal (56), afin d'assurer l'étanchéité entre ledit cinquième canal et les canaux de communication (52, 54) dont les extrémités débouchantes communiquent avec lesdites deux lumières.

8. Compteur de gaz selon la revendication 6 ou 7, dans lequel le cinquième canal de communication (56) est aménagé entre deux canaux de communication adjacents (52, 54) et une de ses extrémités (56a) est disposée dans une partie dite centrale autour de laquelle sont répartis les quatre autres canaux de communication.

## Patentansprüche

1. Verfahren zum Herstellen eines Gaszählers (38) vom Typ mit mehreren Meßkammern mit verformbaren Membranen sowie einem zentralen Körper (40), der mehrere Verbindungskanäle (48-56) bildet, die jeweils die Zufuhr von Gas von außerhalb des zentralen Körpers in die Meßkammern sowie sein Ableiten aus dem zentralen Körper gewährleisten, wobei das Verfahren darin besteht, den zentralen Körper durch Spritzguß zu bilden und dann zu entformen, **dadurch gekennzeichnet, daß** das Verfahren darin besteht, alle Verbindungskanäle (48-56) in einem einzigen Vorgang zu entformen.

2. Verfahren nach Anspruch 1, bei dem alle Verbindungskanäle (48-56) längs einer einzigen Richtung entformt werden.

3. Verfahren nach Anspruch 1 oder 2, bei dem alle Verbindungskanäle (48-56) des Zählers an einer Fläche (58) des zentralen Körpers münden, wobei die Entformungsrichtung (D) senkrecht zu dieser Fläche des zentralen Körpers verläuft.

4. Mittels des Verfahrens nach einem der Ansprüche 1 bis 3 hergestellter Gaszähler (38) vom Typ mit mehreren Meßkammem mit verformbaren Membranen sowie einem zentralen Körper (40), der mehrere Verbindungskanäle (48-56) bildet, die jeweils die Zufuhr von Gas von außerhalb des zentralen Körpers in die Meßkammern sowie dessen Ableitung aus dem zentralen Körper gewährleisten, wobei die Verbindungskanäle an einer Fläche (58) des zentralen Körpers münden, **dadurch gekennzeichnet, daß** die Vollständigkeit jedes Kanals von der Fläche des zentralen Körpers aus sichtbar ist.

5. Gaszähler nach Anspruch 4, bei dem auf der Fläche (58) des zentralen Körpers eine Dichtplatte (60) so angebracht ist, daß die Austrittsenden der Verbindungskanäle (48-56) teilweise verschlossen werden, und ein Verteilerdeckel genanntes Teil (62) an den freiliegenden Abschnitten der Austrittsenden angebracht ist.

6. Gaszähler nach Anspruch 5, bei dem der Verteilerdeckel (62) einerseits vier Durchlässe (64-70) jeweils in Form eines Viertelkreissektors aufweist, die durch radiale Abdichtstege (64a-d) voneinander getrennt sind, wobei jeder dieser Durchlässe mit den freiliegenden Austrittsenden der vier mit den Meßkammern verbundenen Verbindungskanälen (48-54) in Verbindung steht, und andererseits einen kreisförmigen Ring (64e) aufweist, der mit den radialen Stegen vier Öffnungen (72-78) definiert, die mit dem freiliegenden Austrittsende eines fünften Kanals (56) in Verbindung stehen, der zum Ablassen des Gases bestimmt ist.

7. Gaszähler nach Anspruch 6, bei dem der Deckel ferner ein Teil (87) aufweist, das sich beiderseits eines (64c) der radialen Stege in dem Abschnitt von ihm erstreckt, der zwischen zwei Durchlässen (68, 70) liegt, so daß ein Abschnitt des freiliegenden Austrittsendes des fünften Kanals (56) verschlossen wird, damit die Abdichtung zwischen diesem fünften Kanal und den Verbindungskanälen (52, 54) gewährleistet wird, deren Austrittsenden mit diesen Durchlässen in Verbindung stehen.

8. Gaszähler nach Anspruch 6 oder 7, bei dem der fünfte Verbindungskanal (56) zwischen zwei benachbarten Verbindungskanälen (52, 54) angebracht ist und eines seiner Enden (56a) in einem zentral genannten Abschnitt angeordnet ist, um den die vier anderen Verbindungskanäle verteilt sind.

## Claims

1. A method of manufacturing a gas meter (38) of the type comprising a plurality of deformable diaphragm measurement chambers and a central body (40) defining a plurality of communication channels (48-56) serving to feed gas from the outside of said central body into the respective measurement chambers and to evacuate the gas from the central body, said method consisting in making said central body by injection molding and then in unmolding it, the method being **characterized in that** it consists in unmolding all of the communication channels (48-56) in a single operation.

2. A method according to claim 1, consisting in unmolding all of the communication channels (48-56) in a single direction.

3. A method according to claim 1 or 2, in which all of the communication channels (48-56) of the meter open out into a single face (58) of the central body, and the unmolding direction (D) is perpendicular to said face of the central body.

4. A gas meter (38) manufactured by the method according to any one of claims 1 to 3, the meter being of the type comprising a plurality of deformable diaphragm chambers and a central body (40) defining a plurality of communication channels (48-56) serving to feed gas from the outside of said central body into respective measurement chambers and to evacuate the gas from said central body, all of the communication channels opening out into the same face (58) of the central body, the meter being **characterized in that** each channel is visible in full from said face of the central body.

5. A gas meter according to claim 4, in which a sealing plate (60) is placed on the face (58) of the central body in such a manner as to obstruct partially the open ends of the communication channels (48-56) and a piece (62) referred to as a "distribution cover" is placed over the uncovered portions of said open ends.

6. A gas meter according to claim 5, in which the distribution cover (62) comprises firstly four ports (64-70) each in the form of a circular quarter sector and separated from one another by radial sealing strips (64a-d), each of the ports communicating with the uncovered open end of a respective one of the four communication channels (48-54) connected to the measurement chambers, and secondly a circular ring (64e) co-operating with the radial trips to define four orifices (72-78) all communicating with the uncovered open end of a fifth channel (56) which is for evacuating the gas.

7. A gas meter according to claim 6, in which the cover further includes a piece (87) which extends on either side of one of the radial strips (64c) in a portion thereof which is situated between two ports (68, 70) so as to obstruct a portion of the uncovered open end of the fifth channel (56) so as to provide sealing between said fifth channel and the communication channels (52, 54) whose open ends communicate with said two ports.

8. A gas meter according to claim 6 or 7, in which the fifth communication channel (56) is disposed between two adjacent communication channels (52, 54) and one of its ends (56a) is disposed in a central portion around which the other four communication channels are distributed.
